(19) Europäisches Patentamt
European Patent Office
Office européen des brevets

(11) **EP 4 693 932 A1**

(12) **EUROPEAN PATENT APPLICATION**
published in accordance with Art. 153(4) EPC

(43) Date of publication:
**11.02.2026 Bulletin 2026/07**

(21) Application number: **23933917.9**

(22) Date of filing: **28.12.2023**

(51) International Patent Classification (IPC):
**H04B 7/06** $^{(2006.01)}$

(52) Cooperative Patent Classification (CPC):
**H04B 7/0456; H04B 7/06; H04W 4/80**

(86) International application number:
**PCT/CN2023/142790**

(87) International publication number:
**WO 2024/217055 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.04.2023 CN 202310459885**

(71) Applicant: **ZTE Corporation Shenzhen, Guangdong 518057 (CN)**

(72) Inventors:
• **YANG, Jun**
  **Shenzhen, Guangdong 518057 (CN)**
• **CHEN, Yijian**
  **Shenzhen, Guangdong 518057 (CN)**
• **ZHANG, Shujuan**
  **Shenzhen, Guangdong 518057 (CN)**
• **SI, Yuan**
  **Shenzhen, Guangdong 518057 (CN)**

(74) Representative: **Aipex B.V.**
  **Vestdijk 51**
  **5611 CA Eindhoven (NL)**

(54) **CHANNEL INFORMATION FEEDBACK METHOD, ELECTRONIC DEVICE, AND STORAGE MEDIUM**

(57) Provided are a channel information feedback method, an electronic device, and a storage medium. The method includes determining a measurement result of channel state information according to a measured reference signal; determining a codebook, where the codebook includes at least one codeword; determining a codeword W in the codebook according to the measurement result; and feeding back indication information of the codeword W. The codeword W is a matrix that has N rows and r columns and includes r column vectors $V_1$, $V_2$, ..., $V_r$, where $N > 1$, and $r \geq 1$. The i-th column vector $V_i$ of the codeword W is constructed according to the following basis vector model u:

$$u = \begin{bmatrix} \alpha_1 v_1 \\ \alpha_2 v_2 \\ \vdots \\ \alpha_K v_K \end{bmatrix},$$

where the basis vector model u includes K sub-vectors, the length of the k-th sub-vector $v_k$ is $N_k$, $\alpha_k$ is a sub-vector coefficient, $K \geq 1$, $1 \leq k \leq K$, $N_k \geq 1$, and i = 1, 2, ..., r. At least two column vectors in the codeword W are constructed from basis vectors, where the basis vectors satisfy the basis vector model u and include different numbers of sub-vectors.

FIG. 4

The flowchart steps:
- S110: Determine a measurement result of channel state information according to a measured reference signal
- S120: Determine a codebook, where the codebook includes at least one codeword
- S130: Determine a codeword W within the codebook according to the measurement result
- S140: Feed back indication information of the codeword W

**Description**

TECHNICAL FIELD

The present application relates to the field of wireless communications, particularly a channel information feedback method, an electronic device, and a storage medium.

BACKGROUND

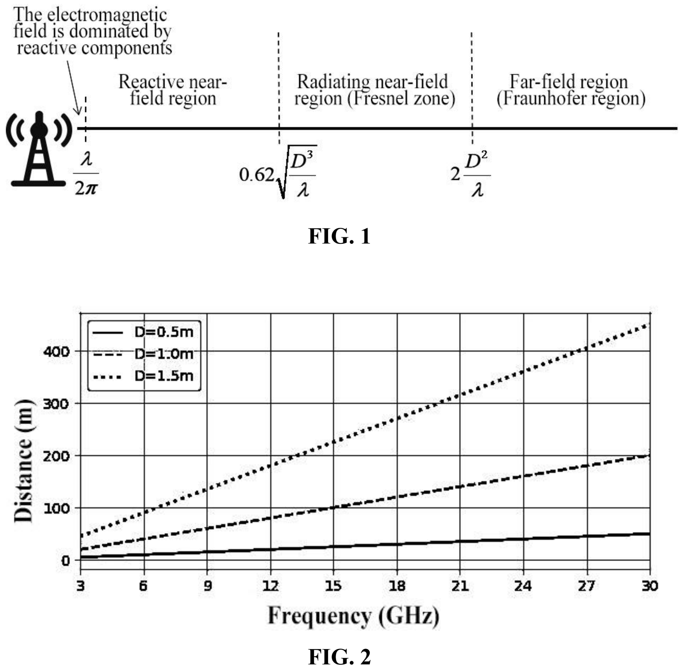

Multiple-input multiple-output (MIMO) technology is a wireless communication technology based on array antennas. In the conventional array antenna theory, the radiation region of an antenna is typically divided into a far-field region, a radiating near-field region, and a reactive near-field region, as shown in FIG. 1. In FIG. 1, D denotes the aperture of the array, and $\lambda$ denotes a carrier wavelength. When a signal transmitted by the antenna reaches the far-field region, the signal may be approximated as a plane wave. The plane wave approximation in the far-field region brings significant benefits to MIMO wireless communication, which not only simplifies the link budget but also reduces the complexity of beam control. Additionally, the number of parameters required for channel feedback is decreased, and the resource overhead is reduced. Communication standards in the related art assume that MIMO channels operate under far-field conditions. However, with the advancement of wireless communication technology, the diversification of wireless communication scenarios and the continuous growth in traffic demands have posed numerous challenges to wireless communications. To address these demands, wireless communication technology is increasingly developing towards higher frequency bands to obtain more spectrum resources while developing towards larger-scale transceiver arrays. As the array size gradually increases (that is, the aperture of the antenna expands) and the carrier frequency rises, traditional far-field transmission scenarios are increasingly becoming near-field transmission issues. As shown in FIG. 2, for an array with an aperture of 0.5 meters (m), the boundary between near and far fields is approximately 5 m from the center of the array at 3 GHz. When the frequency rises to 30 GHz, the boundary between near and far fields extends to about 50 m. When the aperture increases to 1.5 m, the boundary between near and far fields at 30 GHz is pushed out to 450 m. As a result, the vast majority of wireless communication scenarios fall within the near-field region of the array.

When a receiving terminal is located in the near-field region, the received signal no longer meets the plane wave approximation. If a transmitting array continues to configure a transmit precoding according to standard protocols in the related art, the received signal at the receiving terminal suffers significant gain loss. Although a series of near-field precoding feedback schemes have been proposed, these schemes have not been widely adopted due to high computational complexity and incompatibility with the standard protocols in the related art. How to perform channel state information feedback in the near-field region of array antennas has become an urgent problem to address. At present, partitioning a large array into multiple subarrays has become a processing approach of considerable interest. In the related art, various solutions have been proposed for the channel estimation problem, but no corresponding subarray partitioning scheme has yet been proposed. In addition, the related art also lacks precoding feedback schemes that support subarrays, especially subarray precoding in multilayer transmission. Therefore, there is an urgent need for a comprehensive channel information feedback method for subarray partitioning to address performance issues in near-field communication and to enhance the MIMO near-field communication capability.

SUMMARY

A main object of embodiments of the present application is to provide a channel information feedback method, an electronic device, and a storage medium, in which a subarray precoding method is provided to achieve channel state information feedback in near-field communication, thereby solving near-field communication issues and enhancing beamforming gain.

Embodiments of the present application provide a channel information feedback method.

The method includes determining a measurement result of channel state information according to a measured reference signal; determining a codebook, where the codebook includes at least one codeword; determining a codeword W in the codebook according to the measurement result; and feeding back indication information of the codeword W.

The codeword W is a matrix that has N rows and r columns and includes r column vectors $V_1$, $V_2$, ..., $V_r$, the length of each column vector is N, N > 1, and r $\geq$ 1.

The i-th column vector $V_i$ of the codeword W is constructed according to the following basis vector model u:

$$u = \begin{bmatrix} \alpha_1 v_1 \\ \alpha_2 v_2 \\ \vdots \\ \alpha_K v_K \end{bmatrix}.$$

In the above formula, the basis vector model u includes K sub-vectors, the length of the k-th sub-vector $v_k$ is $N_k$, $\alpha_k$ is a sub-vector coefficient, $K \geq 1$, $1 \leq k \leq K$, $N_k \geq 1$, and i = 1, 2, ..., r.

At least two column vectors in the codeword W are constructed from basis vectors, where the basis vectors satisfy the basis vector model u and include different numbers of sub-vectors.

Embodiments of the present application also provide an electronic device. The electronic device includes one or more processors and a memory configured to store one or more programs.

When the one or more programs are executed by the one or more processors, the one or more processors perform the method of any embodiment of the present application.

Embodiments of the present application also provide a computer-readable storage medium. The computer-readable storage medium stores one or more programs. The one or more programs are configured, when executed by one or more processors, cause the one or more processors to perform the method of any embodiment of the present application.

BRIEF DESCRIPTION OF DRAWINGS

FIG. 1 is a diagram illustrating the division of an antenna radiation region according to embodiments of the present application.

FIG. 2 is a diagram illustrating the distance relationships between the near-field/far-field boundary to the array centers of different arrays at different frequency bands according to embodiments of the present application.

FIG. 3 is a diagram of subarray division according to embodiments of the present application.

FIG. 4 is a flowchart of a channel information feedback method according to embodiments of the present application.

FIG. 5 is an example diagram of a channel information feedback method according to embodiments of the present application.

FIG. 6 is a diagram illustrating two types of subarrays according to embodiments of the present application.

FIG. 7 is a structure diagram of a channel information feedback apparatus according to embodiments of the present application.

FIG. 8 is a structure diagram of an electronic device according to embodiments of the present application.

DETAILED DESCRIPTION

Embodiments of the present application also provide a computer-readable storage medium. The computer-readable storage medium stores one or more programs. The one or more programs are configured, when executed by one or more processors, cause the one or more processors to perform the method of any embodiment of the present application.

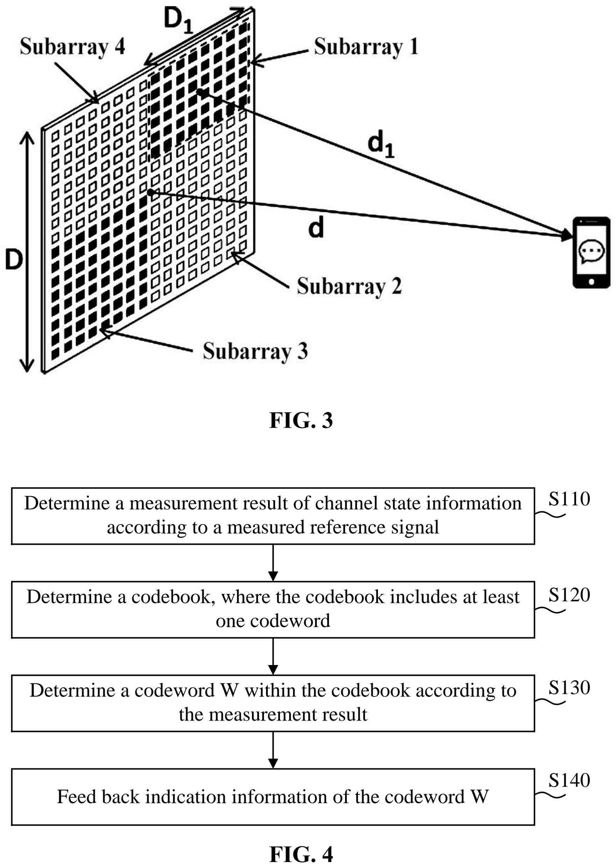

In this embodiment of the present application, a large MIMO array is divided into multiple subarrays, serving as a candidate solution to the near-field communication problem. As shown in FIG. 3, in this solution, a terminal is located in the near-field region of a MIMO array, that is, d is less than $2D^2/\lambda$, but for the subarray 1, the distance $d_1$ from the terminal to the center point of the subarray 1 may be greater than $2D_1^2/\lambda$. D denotes the aperture of the array. $D_1$ denotes the aperture of the subarray 1. In this case, a signal transmitted by each subarray may still be assumed to be a plane wave at the user location. The precoding of each subarray may be determined according to standards in the related art, thereby maintaining good compatibility with communication protocols in the related art. This scheme has a relatively low implementation cost and can achieve a significant near-field gain improvement. However, how to configure a subarray precoding codebook for this scenario has become a primary issue.

FIG. 4 is a flowchart of a channel information feedback method according to embodiments of the present application. This embodiment of the present application is applicable to a scenario where a MIMO array is divided into multiple subarrays to implement channel information feedback. This method can be executed by a channel information feedback apparatus. This apparatus can be implemented by software and/or hardware. As shown in FIG. 4, the method of this embodiment of the present application includes the following:

In S110, a measurement result of channel state information is determined according to a measured reference signal.

In this embodiment of the present application, the measurement result of the channel state information may be determined according to the measured reference signal. Specifically, the reference signal transmitted by the communication terminal may be received, and the measurement result of the channel state information may be determined through estimation of the reference signal. The reference signal may be a pilot signal used for channel estimation. The reference signal may be a known signal sequence. The sequence may be denoted as s. The received reference signal may be represented as:

$$y = Hs + n.$$

In the above formula, H denotes a channel matrix, y denotes a received signal vector, and $n$ denotes a noise vector. The channel estimation may be performed based on the received reference information by means of minimum mean-square error (MMSE), low-order linear minimum mean-square error (LMMSE) or the like, and then the channel matrix H is determined and used as the channel state information. It is to be understood that since the dimension of H is generally large, directly feeding H back to a first communication node may cause a large overhead, and thus, the channel information generally needs to be quantized.

In S120, a codebook is determined, where the codebook includes at least one codeword.

The codebook may be an information set for precoding subarrays in the MIMO array. The codebook may include codewords. Each codeword may be used for configuring the precoding of the MIMO array. It is to be understood that at least one codeword in the codebook is obtained by using the basis vector model of this embodiment of the present application. For example, all codewords in the codebook may be obtained by using the basis vector model of the present application, or some codewords in the codebook are obtained by using the basis vector model of the present application, and other codewords may be generated by using another model.

In this embodiment of the present application, one or more codebooks may be preconfigured based on the communication transmission scenario and the communication transmission requirement, and the codebook for feeding back channel state information may be selected from the one or more codebooks. Specifically, in some embodiments, the codebook may be determined based on the measurement result of the channel state information, or the maximum number of transmission layers of the current channel may be determined based on the rank of the channel matrix H or the channel quality indication information so that a proper codebook is determined.

In S130, a codeword W is determined within the codebook according to the measurement result.

Specifically, an appropriate codeword may be selected from the codebook based on the measurement result. The selected codeword W is used for configuration of the precoding of the MIMO array and for information transmission. One codeword in the codebook may correspond to one piece of spatial channel information, and therefore, the channel information may be obtained based on the fed-back codeword information.

In this embodiment of the present application, the codeword in the codebook may be an N-by-r matrix and includes r column vectors $V_1, V_2, ..., V_r$, with each column vector having a length of N, where $N > 1$ and $r \geq 1$. The matrix of the codeword may be obtained from the basis vector model. The basis vector model is represented as follows:

$$u = \begin{bmatrix} \alpha_1 v_1 \\ \alpha_2 v_2 \\ \vdots \\ \alpha_K v_K \end{bmatrix}.$$

In the above formula, the basis vector model may include a sub-vector $v_k$ and a sub-vector coefficient $\alpha_k$, where $k = 1, 2, ..., K$. The length of the sub-vector $v_k$ is $N_k$. The sum of the lengths of the sub-vectors is N. Each sub-vector in the basis vector model may correspond to the precoding matrix of one subarray. The sub-vector $v_k$ represents a precoding vector for array beam manipulation. The MIMO array may radiate a directional beam in a specified direction or a set of directional beams in specified directions through the precoding vector. The sub-vector coefficient $\alpha_k$ can achieve phase alignment among different subarrays within the MIMO array. The product of a sub-vector and the corresponding sub-vector coefficient may be used as the actual precoding vector of a subarray in the MIMO array. The basis vector model may satisfy the following condition: a sub-vector may be determined according to another sub-vector, or a sub-vector may be determined according to a sub-vector coefficient, and a sub-vector coefficient may be determined according to another sub-vector coefficient, or a sub-vector coefficient may be determined according to a sub-vector.

In S140, indication information of the codeword W is fed back.

The codeword W is a matrix that has N rows and r columns and includes r column vectors $V_1$, $V_2$, ..., $V_r$, where the length of each column vector is N, N > 1, and r $\geq$ 1. The i-th column vector $V_i$ of the codeword W is constructed according to the following basis vector model u:

$$u = \begin{bmatrix} \alpha_1 v_1 \\ \alpha_2 v_2 \\ \vdots \\ \alpha_K v_K \end{bmatrix}.$$

In the above formula, the basis vector model u includes K sub-vectors, the length of the k-th sub-vector $v_k$ is $N_k$, $\alpha_k$ is a sub-vector coefficient, K $\geq$ 1, 1$\leq$ k $\leq$ K, $N_k \geq$ 1, and i = 1, 2, ..., r. At least two column vectors in the codeword W are constructed from basis vectors that satisfy the basis vector model u and include different numbers of sub-vectors.

In this embodiment of the present application, the indication information of the codeword is determined through the preceding operations to indicate the codebook used by the communication terminal in communication. It is to be understood that since the codeword includes one or more precoding vectors, directly feeding back the codeword incurs a large channel resource overhead. The channel overhead of the codeword transmission can be reduced through the indication information. The indication information indicates the codeword. It is to be understood that in this embodiment of the present application, the codeword may be obtained through the basis vector model. The basis vector model includes sub-vectors and sub-vector coefficients. A sub-vector or a sub-vector coefficient may be determined according to another sub-vector or another sub-vector coefficient. That is, in the set FS including sub-vectors and sub-vector coefficients in the basis vector model, at least one subset $FS_1$ is determined according to at least one another subset $FS_2$. The indication information indicating the codeword may be a number or other identifiers.

Specifically, at least two column vectors in the codeword W may be constructed from different basis vectors. The different basis vectors may all conform to the basis vector model u. By constructing the column vectors from different basis vectors, it is possible to set a subarray partitioning scheme for precoding at each transmission layer of the MIMO array separately, facilitating adopting different subarray precoding schemes for different channels and reducing performance loss of the MIMO array.

In some embodiments of the present application, at least two adjacent column vectors $V_i$ and $V_{i+1}$ in the codeword W are constructed from basis vectors $u_i$ and $u_{i+1}$, where the basis vectors $u_i$ and $u_{i+1}$ satisfy the basis vector model u and include different numbers of sub-vectors.

In this embodiment of the present application, two adjacent column vectors $V_i$ and $V_{i+1}$ in the codeword W are constructed from the basis vector $u_i$ and the basis vector $u_{i+1}$, where the basis vector $u_i$ and the basis vector $u_{i+1}$ include different numbers of sub-vectors and satisfy the basis vector model u. It is to be understood that the column vector $V_i$ may be constructed from the basis vector $u_i$, and the column vector $V_{i+1}$ may be constructed from the basis vector $u_{i+1}$. The two basis vectors include different numbers of sub-vectors. It is to be understood that the two column vectors in the codeword W may be constructed from basis vectors including different numbers of sub-vectors, where the basis vectors including different numbers of sub-vectors correspond to different subarray partitioning schemes of the MIMO array. That is, different column vectors in the codeword W may support different array partitioning schemes, or, in other words, different layers of the same codeword may adopt different subarray partitioning schemes.

Based on the preceding embodiments of the present application, the basis vector $u_i$ includes more sub-vectors than the basis vector $u_{i+1}$.

Specifically, the column vector $V_i$ may be the precoding used for the i-th transmission layer while the column vector $V_{i+1}$ may be the precoding used for the (i+1)-th transmission layer. Using the case where the channel condition corresponding to the i-th transmission layer is worse than that of the (i+1)-th transmission layer as an example, the column vector $V_i$ may be constructed from the basis vector $u_i$, and the column vector $V_{i+1}$ may be constructed from the basis vector $u_{i+1}$. The number of sub-vectors included in the basis vector $u_i$ is greater than the number of sub-vectors included in the basis vector $u_{i+1}$ so that the i-th transmission layer corresponding to the column vector $V_i$ can be partitioned into more subarrays, thereby improving the transmission performance. For example, the number of sub-vectors included in the basis vector $u_i$ is 8 while the number of sub-vectors included in the basis vector $u_{i+1}$ is 6.

Based on the preceding embodiments of the present application, the basis vector $u_i$ includes fewer sub-vectors than the basis vector $u_{i+1}$.

Specifically, the column vector $V_i$ may be the precoding used for the i-th transmission layer while the column vector $V_{i+1}$ may be the precoding used for the (i+1)-th transmission layer. Using the case where the performance requirement corresponding to the i-th transmission layer is lower than that of the (i+1)-th transmission layer as an example, the column vector $V_i$ may be constructed from the basis vector $u_i$, and the column vector $V_{i+1}$ may be constructed from the basis vector $u_{i+1}$. The number of sub-vectors included in the basis vector $u_i$ is less than the number of sub-vectors included in the basis vector $u_{i+1}$ so that the performance requirement corresponding to the i-th transmission layer is lower than that of the (i+1)-th transmission layer.

In some embodiments of the present application, the column vectors of the codeword W are divided into at least two column vector groups, and column vectors belonging to different column vector groups are constructed from basis vectors, where the basis vectors satisfy the basis vector model u and include different numbers of sub-vectors.

In an embodiment, the column vectors of the codeword W may be divided into at least two column vector groups, and the column vectors in each column vector group are constructed from basis vectors including the same number of sub-vectors. It is to be understood that the basis vectors including the same number of sub-vectors can satisfy the basis vector model. The basis vectors in each column vector group may be the same or different, but the column vectors in each column vector group are constructed from basis vectors including the same number of sub-vectors. Column vectors belonging to different column vector groups are constructed from basis vectors including different numbers of sub-vectors. All the preceding basis vectors satisfy the basis vector model.

Based on the preceding embodiments of the present application, each column vector group includes at most one column vector of the codeword W.

Specifically, each column vector in the codeword W is assigned to the same column vector group. Basis vectors forming different column vector groups include different numbers of sub-vectors. That is, different column vectors in the codeword W are constructed from basis vectors including different numbers of sub-vectors. For example, a codeword W includes three column vectors that may belong to three different column vector groups. The three column vector groups may each be constructed from basis vectors each including 2 sub-vectors, basis vector each including 7 sub-vectors, and basis vector each including 5 sub-vectors, respectively.

Based on the preceding embodiments of the present application, each column vector group includes adjacent column vectors of the codeword W.

In this embodiment of the present application, the codeword W may include multiple column vector groups. Each column vector group includes adjacent column vectors. For example, one codeword may include eight column vectors $V_1$, $V_2$, $V_3$, $V_4$, $V_5$, $V_6$, $V_7$, and $V_8$. The eight column vectors are divided into three column vector groups. $V_1$, $V_2$, and $V_3$ form a first column vector group. $V_4$ and $V_5$ form a second column vector group. $V_6$, $V_7$, and $V_8$ form a third column vector group. The column vectors in the three column vector groups are constructed from basis vectors each including 8 sub-vectors, basis vectors each including 12 sub-vectors, and basis vectors each including 9 sub-vectors, respectively.

Based on the preceding embodiments of the present application, each column vector group includes nonadjacent column vectors of the codeword W.

Specifically, the codeword W may include multiple column vector groups. Each column vector group includes nonadjacent column vectors. For example, one codeword may include seven column vectors $V_1$, $V_2$, $V_3$, $V_4$, $V_5$, $V_6$, and $V_7$. The seven column vectors are divided into three column vector groups. $V_1$ and $V_4$ form a first column vector group. $V_2$ and $V_6$ form a second column vector group. $V_3$, $V_5$, and $V_7$ form a third column vector group. The column vectors in the three column vector groups are constructed from basis vectors each including 6 sub-vectors, basis vectors each including 4 sub-vectors, and basis vectors each including 9 sub-vectors, respectively.

Based on the preceding embodiments, one column vector of the codeword W may be formed by the Kronecker product of two vectors satisfying the basis vector model u. In this case, at least two column vectors in W satisfy that among the basis vectors for constructing these two column vectors, at least two basis vectors including different numbers of sub-vectors. For example, W includes two column vectors $V_1$ and $V_2$. $V_1$ is formed by the Kronecker product of the basis vectors $u_{11}$ and $u_{12}$. $V_2$ is formed by the Kronecker product of basis vectors $u_{21}$ and $u_{22}$. $u_{11}$ and $u_{21}$ include different numbers of sub-vectors.

Based on the preceding embodiments, one column vector of the codeword W may be generated by the weighted sum of multiple vectors satisfying the basis vector model u. In this case, at least two column vectors in W satisfy that among the basis vectors for constructing these two column vectors, at least two basis vectors include different numbers of sub-vectors. For example, W has two column vectors $V_1$ and $V_2$. $V_1$ is generated by the weighted sum of basis vectors $u_{11}$, $u_{12}$, and $u_{13}$. $V_2$ is generated by the weighted sum of basis vectors $u_{21}$, $u_{22}$, and $u_{23}$. Any basis vector for constructing $V_1$ and at least one basis vector for constructing $V_2$ include different numbers of sub-vectors.

Based on the preceding embodiments, one column vector of the codeword W may be generated by the weighted sum of multiple vectors. Each vector is formed by the Kronecker product of two vectors satisfying the basis vector model u. In this case, at least two column vectors in W satisfy that among the basis vectors for constructing these two column vectors, the at least two basis vectors include different numbers of sub-vectors. For example, W has two column vectors $V_1$ and $V_2$. $V_1$ is generated by the weighted sum of the vectors $V_{11}$ and $V_{12}$. $V_{11}$ and $V_{12}$ are each generated by two basis vectors that each include $K_1$ sub-vectors. $V_2$ is generated by the weighted sum of the vectors $V_{21}$ and $V_{22}$. $V_{21}$ and $V_{22}$ are each generated by two basis vectors that each include $K_2$ sub-vectors. $K_1$ is not equal to $K_2$.

Based on the preceding embodiment, one column vector of the codeword W may be generated by multiple sub-vectors. Each sub-vector is generated by two vectors satisfying the basis vector model u in one of the manners of the preceding embodiments. In this case, at least two column vectors in W satisfy that among the basis vectors for constructing these two column vectors, the at least two basis vectors include different numbers of sub-vectors.

In some embodiments of the present application, the basis vector model u satisfies the following relationship: a subset $FS_1$ of a set $FS = [v_1, v_2, \cdots, v_K, \alpha_1, \alpha_2, \cdots, \alpha_K]$ including sub-vectors and sub-vector coefficients determines a subset $FS_2$ of the set FS.

In this embodiment of the present application, the value of one of the subset $FS_1$ or the subset $FS_2$ is determined according to the value of the other of the subset $FS_1$ or the subset $FS_2$ in the following manner: The value of the subset $FS_1$ is determined according to the value of the subset $FS_2$, or the value of the subset $FS_2$ is determined according to the value of the subset $FS_1$. It is to be understood that when the subset $FS_1$ includes all of the sub-vectors of the basis vector and the subset $FS_2$ includes all of the sub-vector coefficients of the basis vector, all of the sub-vectors of the basis vector may be determined according to all of the sub-vector coefficients of the basis vector; and when the subset $FS_1$ includes a part of the sub-vectors of the basis vector and the subset $FS_2$ includes a part of the sub-vector coefficients of the basis vector, the part of the sub-vectors of the basis vector may be determined according to the part of the sub-vector coefficients of the basis vector.

Based on the preceding embodiments of the present application, the indication information includes at least one indication parameter, and an indication parameter indicates at least two elements in the set FS simultaneously.

In this embodiment of the present application, the fed-back indication information of the codeword may include one or more indication parameters, and an indication parameter may indicate two elements in the set FS simultaneously. For example, one indication parameter may indicate two sub-vectors included in the basis vector of the column vector forming the codeword simultaneously, or one indication parameter may indicate two sub-vector coefficients included in the basis vector of the column vector forming the codeword simultaneously, or one indication parameter may indicate one sub-vector and one sub-vector coefficient included in the basis vector of the column vector forming the codeword simultaneously.

In some embodiments of the present application, the i-th column vector $V_i$ of the codeword W is a column vector satisfying the basis vector model u, where i = 1, 2, ..., r.

Specifically, the codeword W may include r column vectors. Each column vector can be determined according to the basis vector model u. That is, each column vector $V_i$ can satisfy the basis vector model u. That is, r column vectors forming the codeword can satisfy the requirement of the basis vector model u.

By way of example, the column vector of the codeword W conforms to the basis vector model u. That is, the i-th column vector $V_i$ of the codeword W satisfies:

$$V_i = u_i = \begin{bmatrix} \alpha_{i1} v_{i1} \\ \alpha_{i2} v_{i2} \\ \vdots \\ \alpha_{iK} v_{iK} \end{bmatrix}.$$

In the above formula, $u_i$ satisfies the structure of the basis vector model u, and i = 1, 2, ..., r.

In some embodiments of the present application, the i-th column vector $V_i$ of the codeword W is formed by the Kronecker product of two vectors $u_1$ and $u_2$. $u_1$ and $u_2$ are column vectors satisfying the basis vector model u.

In this embodiment of the present application, r column vectors forming the codeword W may each include the Kronecker product of two vectors $u_1$ and $u_2$. $u_1$ and $u_2$ are column vectors satisfying the basis vector model u.

For example, the i-th column vector $V_i$ of the codeword W is formed by the Kronecker product of two vectors $u_{i1}$ and $u_{i2}$. $V_i = u_{i1} \otimes u_{i2}$. $u_{i1}$ and $u_{i2}$ satisfy the structure of the basis vector model u:

$$u_{i1} = \begin{bmatrix} \alpha_{i1,1} v_{i1,1} \\ \alpha_{i1,2} v_{i1,2} \\ \vdots \\ \alpha_{i1,K1} v_{i1,K1} \end{bmatrix}, u_{i2} = \begin{bmatrix} \alpha_{i2,1} v_{i2,1} \\ \alpha_{i2,2} v_{i2,2} \\ \vdots \\ \alpha_{i2,K2} v_{i2,K2} \end{bmatrix}.$$

In the above formula, $K_1 \geq 1$ and $K_2 \geq 1$.

In some other embodiments of the present application, the i-th column vector $V_i$ of the codeword W is generated by the weighted sum of M column vectors:

$$V_i = \sum_{m=1}^{M} \beta_m u_m.$$

In the above formula, $\beta_m$ is a weighting coefficient, $u_m$ is a column vector satisfying the basis vector model u, i = 1, 2, ..., r, and m = 1, 2, ..., M.

Specifically, the column vector in the codeword W may be generated by the weighted sum of multiple column vectors. The column vectors participating in the weighted summation may be column vectors conforming to the basis vector model. The weighting coefficients corresponding to the column vectors participating in the weighted summation may be identical or different.

In some other embodiments of the present application, the i-th column vector $V_i$ of the codeword W is generated by the weighted sum of M column vectors:

$$V_i = \sum_{m=1}^{M} \beta_m w_m.$$

In the above formula, $\beta_m$ is a weighting coefficient, $w_m$ is formed by the Kronecker product of two column vectors $u_{m1}$ and $u_{m2}$, $u_{m1}$ and $u_{m2}$ are column vectors satisfying the basis vector model u, i = 1, 2, ..., r, and m = 1, 2, ..., M.

In this embodiment of the present application, the column vector in the codeword W may be generated by the weighted sum of multiple column vectors. The column vectors participating in the weighted summation may each be the Kronecker product of two column vectors conforming to the basis vector model. The weighting coefficients corresponding to the column vectors participating in the weighted summation may be identical or different.

In some other embodiments of the present application, the i-th column vector $V_i$ of the codeword W satisfies:

$$V_i = \begin{bmatrix} c_1 V_{i1} \\ c_2 V_{i2} \\ \vdots \\ c_S V_{iS} \end{bmatrix}.$$

In the above formula, $c_s$ is a coefficient, $V_{is}$ is a sub-vector, and s = 1, 2, ..., S. $V_{is}$ is generated in at least one of the following manners:

$V_{is}$ is generated by the basis vector model u;

$V_{is}$ is formed by the Kronecker product of two vectors $u_1$ and $u_2$, where $u_1$ and $u_2$ are column vectors satisfying the basis vector model u;

$V_{is}$ is generated by the weighted sum of M column vectors of the basis vector model through $V_{iS} = \sum_{m=1}^{M} \beta_m u_m$, where

$\beta_m$ is a weighting coefficient, $u_m$ is a column vector satisfying the basis vector model u, i = 1, 2, ..., r, and m = 1, 2, ..., M; or

$V_{is}$ is generated by the weighted sum of M column vectors of the basis vector model through $V_{iS} = \sum_{m=1}^{M} \beta_m w_m$, where $\beta_m$ is a weighting coefficient, $w_m$ is formed by the Kronecker product of two column vectors $u_{m1}$ and $u_{m2}$, and $u_{m1}$ and $u_{m2}$ are column vectors satisfying the basis vector model u, where i = 1, 2, ..., r, and m = 1, 2, ..., M.

Specifically, the r column vectors forming the codeword W may include multiple sub-vectors. Each sub-vector has a corresponding coefficient. Each sub-vector may be implemented through the basis vector model. It is to be understood that generating the sub-vector by using the basis vector model includes, but is not limited to, at least one of the following: using the vector corresponding to the basis vector model as the sub-vector, using the Kronecker product of two vectors conforming to the basis vector model as the sub-vector, using the weighted sum of multiple vectors conforming to the basis vector model as the sub-vector, or using the weighted sum of multiple vectors as the sub-vector, where each vector is the Kronecker product of two vectors conforming to the basis vector model.

In this embodiment, the weighting coefficient $\beta_m$ may be a preset value. For example, in one case, the weighting coefficient satisfies $\sum_{m=1}^{M} \beta_m = 1$ and $\beta_m = 1/M$. For another example, in another case, the weighting coefficient $\beta_m$ is determined according to the value of M. For example, when M = 2, $\beta_1 = 0.6$, $\beta_2 = 0.4$; and when M = 3, $\beta_1 = 0.5$, $\beta_2 = 0.3$, $\beta_2 = 0.2$.

In this embodiment, the coefficient $c_s$ may be a preset value. In a communication scenario, $c_s$ is a fixed constant, for example, $c_s = 1$; or $c_s$ is a constant greater than 0 and less than 1 and increases as the sequence number s increases. In another communication scenario, $c_s$ is determined according to the indication information.

In some embodiments of the present application, the indication information includes indication parameters indicating sub-vectors and sub-vector coefficients of basis vectors constituting the codeword W.

In some embodiments of the present application, the k-th sub-vector $v_k$ of the basis vector model u satisfies:

$$v_k = \begin{cases} \begin{bmatrix} 1 & e^{j\theta_k} & \cdots & e^{j(N_k-1)\theta_k} \end{bmatrix}^T, & N_k > 1, \\ 1, & N_k = 1, \end{cases}$$

where $\theta_k$ is a real number, j is an imaginary unit, and the superscript T represents transposition.

In this embodiment of the present application, when the length of the sub-vector of the basis vector model is 1, the sub-vector may be 1; and when the length of the sub-vector is greater than 1, the sub-vector may be $[1 \ e^{j\theta k} \ ... \ e^{j(Nk-1)\theta k}]^T$, where $\theta_k$ is a real number, j is an imaginary unit, and the superscript T represents transposition.

In some other embodiments of the present application, the k-th sub-vector $v_k$ of the basis vector model u is formed by the Kronecker product of two basis vectors $v_{k1}$ and $v_{k2}$:

$$v_k = v_{k1} \otimes v_{k2}.$$

In the above formula, the operator $\otimes$ represents a Kronecker product, and $v_{k1}$ and $v_{k2}$ represent two basis vectors that satisfy:

$$v_{kl} = \begin{cases} \begin{bmatrix} 1 & e^{j\theta_{kl}} & \cdots & e^{j(N_{kl}-1)\theta_{kl}} \end{bmatrix}^T, & N_{k1} > 1, \\ 1, & N_{k1} = 1, \end{cases}$$

where $\theta_{kl}$ is a real number, j is an imaginary unit, $l \in [1,2]$, $N_{k1}*N_{k2} = N_k$, and the superscript T represents transposition.

In this embodiment of the present application, the sub-vector of the basis vector model may be the Kronecker product of two basis vectors. The product of the lengths of the two basis vectors may be the length of the sub-vector of the basis vector model. When the length of the sub-vector is 1, the basis vector may be 1. When the length of the sub-vector is greater than 1, the basis vector may be $[1 \ e^{j\theta kl} \ ... \ e^{j(Nk-1)\theta kl}]^T$. $\theta_{kl}$ is a real number. j is an imaginary unit. The superscript T represents transposition.

In some embodiments of the present application, the k-th sub-vector $v_k$ of the basis vector model u satisfies:

$$v_k = \begin{cases} \left[ 1 \quad e^{j\theta_k^{(1)}} \quad \cdots \quad e^{j\theta_k^{(N_k-1)}} \right]^T, & N_k > 1, \\ 1, & N_k = 1, \end{cases}$$

where $\theta_k^{(n)} = \xi_k + n\eta_k + n^2\zeta_k$, $\xi_k$, $\eta_k$, and $\zeta_k$ are each a preset real-valued constant, j is an imaginary unit, $1 \leq n \leq N_k$, and the superscript T represents transposition.

Specifically, when the length of the sub-vector of the basis vector model is greater than 1, the value is determined by using $\left[ 1 \quad e^{j\theta_k^{(1)}} \quad \cdots \quad e^{j\theta_k^{(N_k-1)}} \right]^T$, and $\theta_k^{(n)}$ may be determined by using $\theta_k^{(n)} = \xi_k + n\eta_k + n^2\zeta_k$ and three preset real-valued constants $\xi_k$, $\eta_k$, and $\zeta_k$.

In some embodiments of the present application, the k-th sub-vector $v_k$ of the basis vector model u is formed by the Kronecker product of two basis vectors $v_{k1}$ and $v_{k2}$:

$$v_k = v_{k1} \otimes v_{k2}.$$

In the above formula, the operator $\otimes$ represents a Kronecker product, and $v_{k1}$ and $v_{k2}$ represent two basis vectors that satisfy:

$$v_{kl} = \begin{cases} \left[ 1 \quad e^{j\theta_{kl}^{(1)}} \quad \cdots \quad e^{j\theta_{kl}^{(N_{kl}-1)}} \right]^T, & N_{kl} > 1, \\ 1, & N_{kl} = 1, \end{cases}$$

where $\theta_{kl}^{(n)} = \xi_{kl} + n\eta_{kl} + n^2\zeta_{kl}$, $\xi_{kl}$, $\eta_{kl}$, and $\zeta_{kl}$ are each a preset real-valued constant, j is an imaginary unit, $l \in [1,2]$, $1 \leq n \leq N_{kl}$, $N_{k1}*N_{k2} = N_k$, and the superscript T represents transposition.

Specifically, the sub-vector of the basis vector model is the Kronecker product of two basis vectors. When the length of the sub-vector is greater than 1, the values of the two basis vectors may each be determined by using $\left[ 1 \quad e^{j\theta_{kl}^{(1)}} \quad \cdots \quad e^{j\theta_{kl}^{(N_{kl}-1)}} \right]^T$. $\theta_{kl}^{(n)}$ may be determined by using $\theta_{kl}^{(n)} = \xi_{kl} + n\eta_{kl} + n^2\zeta_{kl}$ and three preset real-valued constants $\xi_k$, $\eta_k$, and $\zeta_k$.

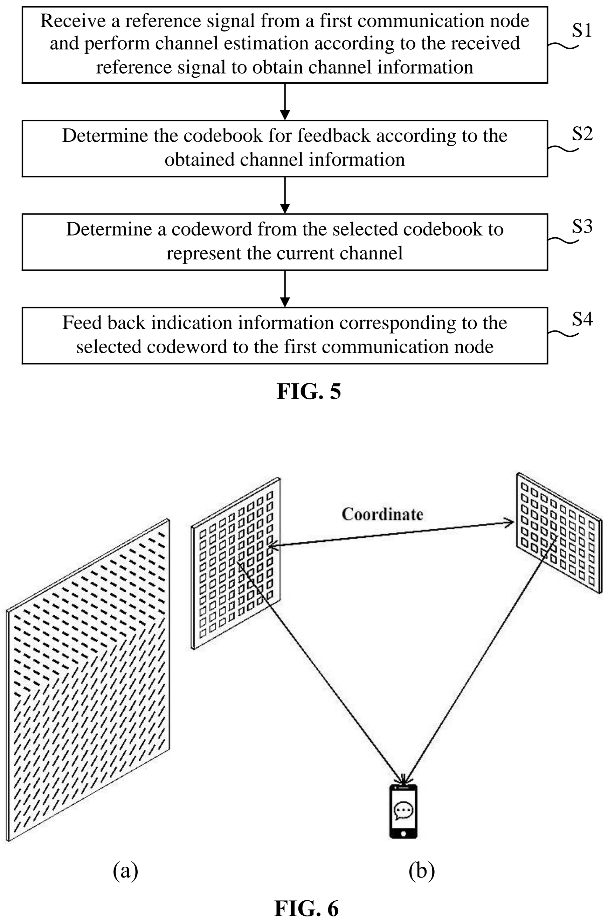

In an example embodiment, FIG. 5 is an example diagram of a channel information feedback method according to embodiments of the present application. Using a second communication node implementing the method of this embodiment of the present application as an example, the second communication node may include a base station, a mobile terminal, an Internet of Things node, or other communication nodes capable of transmitting and receiving information. Referring to FIG. 5, the method of this embodiment of the present application includes S1-S4.

In S1, a reference signal is received from a first communication node, and channel estimation is performed according to the received reference signal so that channel information is obtained.

The reference signal may be a pilot signal used for channel estimation. The signal is a known signal sequence. The sequence may be denoted as s. The received signal may be represented as:

$$y = Hs + n.$$

In the above formula, H is a channel matrix, y is a received signal vector, and n is a noise vector. The channel estimation may be performed through, for example, the minimum mean squared error (MMSE) or the linear minimum mean squared error (LMMSE) so that the channel matrix H is obtained. Since generally the dimension of H is large, directly feeding back H to the first communication node would result in a large overhead, and therefore generally the channel information is required to be quantized.

In S2, the codebook for feedback is determined according to the obtained channel information.

The codebook is a codeword set. The codeword set includes multiple codewords for configuring the precoding of a MIMO array. All codewords of the codebook may be generated according to the codeword model of the present application, or some codewords of the codebook may be generated by using other models. In the codebook, at least two

codewords $W_1$ and $W_2$ include different numbers of column vectors. The different column vectors in $W_1$ include the same number ($K_1$) of sub-vectors. The different column vectors in $W_2$ include the same number ($K_2$) of sub-vectors. $K_1$ is not equal to $K_2$. In the codebook, at least two codewords $W_3$ and $W_4$ include the same number of column vectors, and the i-th column vectors in $W_3$ and $W_4$ include different numbers of sub-vectors. In the codebook, at least two codewords $W_5$ and $W_6$ include the same number of column vectors, and different column vectors in $W_5$ and $W_6$ include different numbers of sub-vectors.

In S3, a codeword is determined from the selected codebook to represent the current channel.

A codebook is actually a quantized form of spatial channels, a codeword included in the codebook represents information about one of the spatial channels, and it is required to select a codeword matching the current channel from the codebook, where the selected codeword is used for information transmission.

In this embodiment of the present application, the column vector of the codeword W may be constructed according to a basis vector model. The basis vector model is represented as follows:

$$u = \begin{bmatrix} \alpha_1 v_1 \\ \alpha_2 v_2 \\ \vdots \\ \alpha_K v_K \end{bmatrix}.$$

In the above formula, The basis vector model may include the sub-vector $v_k$ and the sub-vector coefficient $\alpha_k$, where $k = 1, 2, ..., K$. The length of each sub-vector $v_k$ is $N_k$. The sum of the lengths of all sub-vectors is N. This basis vector model is divided into K sub-vectors. Each sub-vector may correspond to the precoding of one subarray. Specifically, the sub-vector $v_k$, represents a precoding vector for array beam manipulation and may be selected from one or more given basis vector sets. When the precoding is applied to a subarray of the MIMO array, that subarray may radiate a directional beam in a specified direction or a set of directional beams along specified directions. The subarray may be a logically partitioned subarray (FIG. 3), a physically isolated subarray, or a subarray that is spatially separated by a certain distance from another subarray. In FIG. 6(a), a large array is divided into two subarrays, where the upper subarray is a +45° polarized array and the lower subarray is a -45° polarized array. This type of division facilitates polarization isolation and reduces interference between dual-polarized signals. FIG. 6(b) shows cooperative communication between distributed arrays. The two separate arrays may be considered as two subarrays of a large array. The communication scenarios shown in FIG. 3 and FIG. 6 both involve subarray precoding. The codeword model of the present application is applicable to the preceding communication scenario and is also applicable to other future communication scenarios that require subarray division.

In this embodiment of the present application, at least two column vectors in the codeword W are constructed from multiple basis vectors including different numbers of sub-vectors, and the multiple basis vectors may be basis vectors that conform to the basis vector model. In MIMO multi-user wireless communication, the MIMO array performs beamforming for each user using an independent codeword. Depending on the differences in channel conditions, codewords supporting different numbers of transmission layers may be selected for downlink beamforming. When subarray-based precoding is adopted, channels corresponding to different transmission layers may differ. If the same subarray partitioning is applied to all transmission layers, performance loss occurs. A more reasonable precoding design is to adopt different subarray partitioning strategies for different layers according to the channel conditions.

The present application, on the basis of conventional MIMO multilayer transmission, designs an independent subarray partitioning scheme for the precoding of each transmission layer of the MIMO array. Accordingly, the new codeword model proposed in the present application can support subarray partitioning for multilayer transmission, characterized in that different column vectors in the codeword W may be constructed from basis vectors, where the basis vectors satisfy the model u and include different numbers of sub-vectors.

By way of example, a codeword includes multiple column vectors. $W = [V_1, V_2, ..., V_r]$. The r column vectors of the codeword W are constructed from basis vectors $[u_1, u_2, ..., u_r]$ satisfying the model u. At least two of these basis vectors include different numbers of sub-vectors. For example, when two different column vectors $V_i$ and $V_j$ in W are constructed from basis vectors $u_i$ and $u_j$ including different numbers of sub-vectors, $u_i$ and $u_j$ may be represented as:

$$u_i = \begin{bmatrix} \alpha_{i1} v_{i1} \\ \alpha_{i2} v_{i2} \\ \vdots \\ \alpha_{iK_1} v_{iK_1} \end{bmatrix}, \quad u_j = \begin{bmatrix} \alpha_{j1} v_{j1} \\ \alpha_{j2} v_{j2} \\ \vdots \\ \alpha_{jK_2} v_{jK_2} \end{bmatrix},$$

In the above formula, the number ($K_1$) of sub-vectors of $u_i$ is not equal to the number ($K_2$) of sub-vectors of $u_j$, and i is not equal to j.

In some embodiments, at least two adjacent column vectors $V_i$ and $V_{i+1}$ in the codeword W are constructed from basis vectors $u_i$ and $u_{i+1}$, where $1 \leq i < r$. The basis vectors $u_i$ and $u_{i+1}$ satisfy the basis vector model u and include different numbers of sub-vectors..

Further, in some embodiments, since the channel condition corresponding to the i-th transmission layer is worse than that of the (i+1)-th transmission layer, to improve the performance of this transmission layer, the array may be divided into more subarrays. Accordingly, the i-th column vector of W (that is, the precoding vector used for this transmission layer) is constructed from a basis vector including more sub-vectors. For example, the basis vector $u_i$ for constructing the i-th column vector of the codeword W includes 8 sub-vectors while the basis vector $u_{i+1}$ for constructing the (i+1)-th column vector includes only 6 sub-vectors.

In some other embodiments, since the performance requirement of the i-th transmission layer is lower than that of the (i+1)-th transmission layer, it may be constructed from a basis vector including fewer sub-vectors. For example, the basis vector $u_i$ for constructing the i-th column vector of the codeword W includes 5 sub-vectors while the basis vector $u_{i+1}$ for constructing the (i+1)-th column vector includes 7 sub-vectors.

In some other embodiments, the multiple transmission layers are pre-ranked according to the channel condition. The channel quality of the i-th transmission layer is better than that of the (i+1)-th transmission layer. In this case, it may be required that a transmission layer with a larger sequence number uses a basis vector including more sub-vectors to construct a column vector of the codeword. For example, a codeword includes four column vectors, and the column vectors corresponding to the 1st, 2nd, 3rd, and 4th transmission layers are constructed from basis vectors each including 2 sub-vectors, basis vectors each including 4 sub-vectors, basis vectors each including 6 sub-vectors, and basis vectors each including 8 sub-vectors, respectively.

In some other embodiments, the multiple transmission layers are pre-ranked according to the transmission performance requirement. The performance requirement of the i-th transmission layer is higher than that of the (i+1)-th transmission layer. In this case, it may be required that a transmission layer with a smaller sequence number uses a basis vector including more sub-vectors to construct a column vector of the codeword. For example, a codeword includes four column vectors, and the column vectors corresponding to the 1st, 2nd, 3rd, and 4th transmission layers are constructed from basis vectors each including 8 sub-vectors, basis vectors each including 6 sub-vectors, basis vectors each including 4 sub-vectors, and basis vectors each including 2 sub-vectors, respectively.

By way of example, the column vectors in the codeword W may be divided into multiple column vector groups. Column vectors belonging to the same group are constructed from basis vectors, where the basis vectors satisfy the model u and include the same number of sub-vectors; whereas column vectors belonging to different groups are constructed from basis vectors, where the basis vectors satisfy the model u and include different numbers of sub-vectors.

Based on the preceding embodiments, each column vector group includes at most one column vector of W. In this case, the different column vectors of W are constructed from basis vectors including different numbers of sub-vectors. For example, a codeword includes three column vectors that may belong to three different column vector groups. The three column vector groups may each be constructed from basis vectors each including 2 sub-vectors, basis vectors each including 7 sub-vectors, and basis vectors each including 5 sub-vectors, respectively.

Based on the preceding embodiments, each column vector group includes adjacent column vectors of the codeword W. For example, one codeword may include eight column vectors $V_1$, $V_2$, $V_3$, $V_4$, $V_5$, $V_6$, $V_7$, and $V_8$. The eight column vectors are divided into three column vector groups. $V_1$, $V_2$, and $V_3$ form a first column vector group. $V_4$ and $V_5$ form a second column vector group. $V_6$, $V_7$, and $V_8$ form a third column vector group. The column vectors in the three column vector groups are constructed from basis vectors each including 8 sub-vectors, basis vectors each including 12 sub-vectors, and basis vectors each including 9 sub-vectors, respectively.

Based on the preceding embodiments of the present application, each column vector group includes nonadjacent column vectors of the codeword W. For example, one codeword may include seven column vectors $V_1$, $V_2$, $V_3$, $V_4$, $V_5$, $V_6$, and $V_7$. The seven column vectors are divided into three column vector groups. $V_1$ and $V_4$ form a first column vector group. $V_2$ and $V_6$ form a second column vector group. $V_3$, $V_5$, and $V_7$ form a third column vector group. The column vectors in the three column vector groups are constructed from basis vectors each including 6 sub-vectors, basis vectors each including 4 sub-vectors, and basis vectors each including 9 sub-vectors, respectively.

In this embodiment of the present application, allowing different column vectors in the codeword W to be constructed from basis vectors including different numbers of sub-vectors enables optimized precoding design according to channel conditions, improves the performance of MIMO single-user multilayer transmission, balances the feedback overhead, and facilitates standardization and practical implementation.

In this embodiment of the present application, the basis vector model u may include sub-vectors and sub-vector coefficients, and sub-vectors in the basis vector model may take different forms:

1. The k-th sub-vector $v_k$ of the basis vector model u satisfies:

$$v_k = \begin{cases} \begin{bmatrix} 1 & e^{j\theta_k} & \cdots & e^{j(N_k-1)\theta_k} \end{bmatrix}^T, & N_k > 1, \\ 1, & N_k = 1, \end{cases}$$

where $\theta_k$ is a real number, j is an imaginary unit, and the superscript T represents transposition.

2. The k-th sub-vector $v_k$ of the basis vector model u satisfies:

$$v_k = \begin{cases} \begin{bmatrix} 1 & e^{j\theta_k^{(1)}} & \cdots & e^{j\theta_k^{(N_k-1)}} \end{bmatrix}^T, & N_k > 1, \\ 1, & N_k = 1, \end{cases}$$

where $\theta_k^{(n)} = \xi_k + n\eta_k + n^2\zeta_k$, $\xi_k$, $\eta_k$, and $\zeta_k$ are each a preset real-valued constant, j is an imaginary unit, $1 \le n \le N_k$, and the superscript T represents transposition.

3. The k-th sub-vector $v_k$ of the basis vector model u is formed by the Kronecker product of two basis vectors $v_{k1}$ and $v_{k2}$:

$$v_k = v_{k1} \otimes v_{k2}.$$

In the above formula, the operator $\otimes$ represents a Kronecker product, and $v_{k1}$ and $v_{k2}$ represent two basis vectors that satisfy:

$$v_{k1} = \begin{cases} \begin{bmatrix} 1 & e^{j\theta_{k1}} & \cdots & e^{j(N_{k1}-1)\theta_{k2}} \end{bmatrix}^T, & N_{k1} > 1, \\ 1, & N_{k1} = 1, \end{cases}$$

$$v_{k2} = \begin{cases} \begin{bmatrix} 1 & e^{j\theta_{k2}} & \cdots & e^{j(N_{k2}-1)\theta_{k2}} \end{bmatrix}^T, & N_{k2} > 1, \\ 1, & N_{k2} = 1, \end{cases}$$

where $\theta_{k1}$ and $\theta_{k2}$ are given constants, $N_k = N_{k1}*N_{k2}$, j is an imaginary unit, and the superscript T represents transposition.

4. The k-th sub-vector $v_k$ of the basis vector model u is formed by the Kronecker product of two basis vectors $v_{k1}$ and $v_{k2}$:

$$v_k = v_{k1} \otimes v_{k2}.$$

In the above formula, the operator $\otimes$ represents a Kronecker product, and $v_{k1}$ and $v_{k2}$ represent two basis vectors that satisfy:

$$v_{k1} = \begin{cases} \begin{bmatrix} 1 & e^{j\theta_{k1}^{(1)}} & \cdots & e^{j\theta_{k1}^{(N_{k1}-1)}} \end{bmatrix}^T, & N_{k1} > 1, \\ 1, & N_{k1} = 1, \end{cases}$$

$$v_{k2} = \begin{cases} \begin{bmatrix} 1 & e^{j\theta_{k2}^{(1)}} & \cdots & e^{j\theta_{k2}^{(N_{k2}-1)}} \end{bmatrix}^T, & N_{k2} > 1, \\ 1, & N_{k2} = 1, \end{cases}$$

where $\theta_{kl}^{(n)} = \xi_{kl} + n\eta_{kl} + n^2\zeta_{kl}$, $\xi_{kl}$, $\eta_{kl}$, and $\zeta_{kl}$ are each a preset real-valued constant, j is an imaginary unit, $l \in [1,2]$, $1 \leq n \leq N_{kl}$, $N_k = N_{k1}*N_{k2}$, and the superscript T represents transposition.

In this embodiment of the present application, there exists an association between a sub-vector and a sub-vector coefficient in the basis vector model u. Sub-vectors and sub-vector coefficients in the basis vector module u constitute the set FS. $FS = [v_1, v_2, \cdots, v_K, \alpha_1, \alpha_2, \cdots, \alpha_K]$. A subset $FS_1$ of the set FS determines a subset $FS_2$ of the set FS.

Since definite spatial position relationships exist between the subarrays, associations between subarray precoding can be derived from this spatial arrangement. Therefore, in the basis vector model u, there exist definite associations between the sub-vectors and their coefficients. Depending on the selected precoding type, some of the sub-vectors and/or sub-vector coefficients of the basis vector model u can determine the remaining parts of the basis vector model u.

In an embodiment, the k-th sub-vector $\alpha_k$ of the basis vector model u is determined according to at least one matrix and one coefficient in a set $[v_1, v_2, \cdots, v_k, \alpha_1, \alpha_2, \cdots, \alpha_{k-1}]$.

By way of example, $\alpha_1$ is a preset value, and the k-th coefficient $\alpha_k$ is determined according to $\alpha_{k-1}$ and $v_{k-1}$, where $2 \leq k \leq K$. For example, the coefficient of the k-th sub-vector may be determined according to the sub-vector $v_{k-1}$ and its sub-vector coefficient according to:

$$\alpha_k = \alpha_{k-1} e^{j\arg(v_{k-1,N_{k-1}})} e^{j\beta}.$$

In the above formula, β is a preset constant. For another example, the coefficient is determined according to $v_{k-1}$ and its coefficient according to:

$$\alpha_k = \alpha_{k-1} e^{j\arg(v_{k-1}[N_{k-1}])} e^{j\Delta\phi_{k-1}} e^{j\beta}.$$

In the above formula, $\Delta\phi_{k-1} = \arg(v_{k-1,s}) - \arg(v_{k-1,s-1})$ denotes the phase difference between any two adjacent elements in $v_{k-1}$, and $1 \leq s \leq N_{k-1}$.

In another example embodiment, $\alpha_k$ is determined according to $\alpha_{k-1}$, $v_{k-1}$, and $v_k$. For example, $\alpha_k$ may be determined according to the following formula:

$$\alpha_k = \alpha_{k-1} e^{j\arg(v_{k-1,N_{k-1}})} e^{j\Delta\phi_k} e^{j\beta}.$$

In the above formula, $\Delta\phi_k = \arg(v_{k,s}) - \arg(v_{k,s-1})$ denotes the phase difference between any two adjacent elements in $v_k$, β is a preset constant. For another example, $\alpha_k$ may be determined according to the following formula:

$$\alpha_k = \alpha_{k-1} e^{j\arg(v_{k-1,N_{k-1}})} e^{j(\Delta\phi_{k-1} + \Delta\phi_k)/2} e^{j\beta}.$$

In the above formula, $\Delta\phi_{k-1}$ and $\Delta\phi_k$ denote the phase difference between any two adjacent elements in $v_{k-1}$ and the phase difference between any two adjacent elements in $v_k$ respectively.

In another embodiment, the k-th sub-vector in the column vector V may be determined according to at least one matrix and one coefficient in $[v_1, v_2, \cdots, v_{k-1}, \alpha_1, \alpha_2, \cdots, \alpha_k]$. For example, the k-th sub-vector coefficient of u may be written in the form of $\alpha_k = a_k e^{j(\varphi k1 + \varphi k2)}$. The (k-1)-th sub-vector $v_{k-1} = [1, e^{j\varphi k1}, e^{j2\varphi k1}, \cdots, e^{j(Nk-1-1)\varphi k1}]^T$ may be determined according to the parameter $\varphi_{k1}$ of the coefficient. In another scenario, the k-th coefficient of u may be written in the form of $\alpha_k = a_k e^{j(\varphi k1 + \varphi k2 + \varphi k3)}$. The sub-vectors $v_{k-1} = [1, e^{j\varphi k1}, e^{j2\varphi k1}, \cdots, e^{j(Nk-1-1)\varphi k1}]^T$ and $v_k = [1, e^{j\varphi k2}, e^{j2\varphi k2}, \cdots, e^{j(Nk-1)\varphi k2}]^T$ may be determined according to the parameters $\varphi_{k1}$ and $\varphi_{k2}$ respectively, where $2 \leq k \leq K$.

In this embodiment of the present application, the sub-vectors in the basis vector model u may have the same or different lengths.

In some embodiments of the present application, the sub-vectors in the basis vector model u have the same length. The advantages of using sub-vectors of the same length include simplifying the codeword model, requiring fewer configuration parameters when generating a codeword, enabling relatively fixed subarray partitioning, and making engineering implementation easier. However, in near-field communication, this may result in a performance loss.

In some other embodiments, at least one sub-vector in the basis vector model u has a length different from that of other sub-vectors. Accordingly, at least two subarrays in the MIMO array include different numbers of antenna elements. In this embodiment of the present application, using sub-vectors of different lengths can further improve the accuracy of channel characterization and provide a higher gain for the MIMO array.

In this embodiment of the present application, the codeword includes r column vectors. Each column vector may be constructed based on a basis vector model. In this embodiment of the present application, the column vector may be constructed in at least one of the following manners:

1. The column vector of the codeword W conforms to the basis vector model u. That is, the i-th column vector $V_i$ of the codeword W satisfies:

$$V_i = u_i = \begin{bmatrix} \alpha_{i1} v_{i1} \\ \alpha_{i2} v_{i2} \\ \vdots \\ \alpha_{iK} v_{iK} \end{bmatrix}.$$

In the above formula, $u_i$ satisfies the structure of the basis vector model u, and i = 1, 2, ..., r.

2. The i-th column vector $V_i$ of the codeword W is formed by the Kronecker product of two vectors $u_{i1}$ and $u_{i2}$. $V_i = u_{i1} \otimes u_{i2}$. $u_{i1}$ and $u_{i2}$ satisfy the structure of the basis vector model u:

$$u_{i1} = \begin{bmatrix} \alpha_{i1,1} v_{i1,1} \\ \alpha_{i1,2} v_{i1,2} \\ \vdots \\ \alpha_{i1,K1} v_{i1,K1} \end{bmatrix}, u_{i2} = \begin{bmatrix} \alpha_{i2,1} v_{i2,1} \\ \alpha_{i2,2} v_{i2,2} \\ \vdots \\ \alpha_{i2,K2} v_{i2,K2} \end{bmatrix}.$$

In the above formula, $K_1 \geq 1$ and $K_2 \geq 1$.

3. The i-th column vector $V_i$ of the codeword W is generated by the weighted sum of M column vectors:

$$V_i = \sum_{m=1}^{M} \beta_m u_m.$$

In the above formula, $\beta_m$ is a weighting coefficient, and $u_m$ satisfies the structure of the basis vector model u.

$$u_m = \begin{bmatrix} \alpha_{m1} v_{m1} \\ \alpha_{m2} v_{m2} \\ \vdots \\ \alpha_{mK_m} v_{mK_m} \end{bmatrix}.$$

In the above formula, m = 1, 2, ..., M, and $K_m$ is the number of sub-vectors of $u_m$.

4. The i-th column vector $V_i$ of the codeword W is generated by the weighted sum of M column vectors:

$$V_i = \sum_{m=1}^{M} \beta_m u_m.$$

In the above formula, $\beta_m$ is a weighting coefficient, $u_m$ is formed by the Kronecker product of two column vectors $u_{m1}$ and $u_{m2}$, $u_{m1}$ and $u_{m2}$ satisfy the structure of the basis vector model u. i = 1, 2, ..., r, and m = 1, 2, ..., M.

5. The i-th column vector $V_i$ of the codeword W includes S column vectors:

$$V_i = \begin{bmatrix} c_1 V_{i1} \\ c_2 V_{i2} \\ \vdots \\ c_S V_{iS} \end{bmatrix}.$$

In the above formula, $c_s$ is a preset coefficient, $V_{is}$ is constructed in at least one of the preceding construction manners, $S > 1$, and $1 \leq s \leq S$. Generating the sub-vector $V_{is}$ by using the basis vector model includes, but is not limited to, at least one of the following: using the vector corresponding to the basis vector model as the sub-vector, using the Kronecker product of two vectors conforming to the basis vector model as the sub-vector, using the weighted sum of multiple vectors conforming to the basis vector model as the sub-vector, or using the weighted sum of multiple vectors as the sub-vector, where each vector is the Kronecker product of two vectors conforming to the basis vector model.

The codeword constructed based on the column vector model can be used to form a precoding codebook for beam manipulation of the MIMO array. One codeword is selected for configuring the precoding of the MIMO array so that the MIMO array can radiate electromagnetic signals in one direction or a group of directions, thereby achieving beam manipulation of the MIMO array.

In S4, indication information corresponding to the selected codeword is fed back to the first communication node.

A codeword includes one or more precoding vectors. Directly feeding back the codeword to the first communication node would incur significant channel resource overhead and waste time-frequency resources. Therefore, only the indication information corresponding to the selected codeword is fed back to the first communication node. The indication information indicates the selected codeword. The first communication node may select the corresponding codeword from the codebook according to the indication information, where the selected codeword is used for precoding configuration. The indication information may be a number or another identifier for identifying the codeword.

For example, when the column vectors of a codeword are directly constructed from the model u including two sub-vectors, if the indication information includes numbers [0, 1, 3, 4], the corresponding codeword can be denoted as $W_{0,1;3,4}$, indicating that the codeword includes two column vectors, each column vector includes two sub-vectors, the two sub-vectors and their coefficients of the first column vector are determined according to the indication parameters [0, 1], and the two sub-vectors and their coefficients of the second column vector are determined according to the indication parameters [3, 4]. When equal-phase-gradient precoding is used for the sub-vectors of the codeword W, the four indication parameters may be in one-to-one correspondence with the phase gradients. For example, Table 1 lists phase gradients corresponding to indication information with numbers. The indication parameters in the indication information can correspond to the phase gradients by using the table, and then a required codeword can be generated.

Table 1 Relationships between indication parameters and phase gradients

| No. | 1 | 2 | 3 | 4 | 5 | 6 | 7 | 8 | 9 |
|---|---|---|---|---|---|---|---|---|---|
| Phase Gradient | $(1-1)\pi/8$ | $(2-1)\pi/8$ | $(3-1)\pi/8$ | $(4-1)\pi/8$ | $(5-1)\pi/8$ | $(6-1)\pi/8$ | $(7-1)\pi/8$ | $(8-1)\pi/8$ | $(9-1)\pi/8$ |

If one codeword includes two column vectors, and each column vector includes two sub-vectors, and each sub-vector has a length of 3. Assuming that the coefficient of the first sub-vector of each column vector is 1, and the coefficient of the second sub-vector is determined according to the last element of the previous sub-vector, then the indication information requires only four indication parameters for determining the four sub-vectors to obtain a corresponding codeword. For example, according to Table 1, one example of codeword $W_{2,5,6,7}$ satisfies:

$$W_{2,5,6,7} = \begin{pmatrix} \begin{pmatrix} 1 \\ e^{j\pi/8} \\ e^{j2\pi/8} \end{pmatrix} & \begin{pmatrix} 1 \\ e^{j5\pi/8} \\ e^{j2*5\pi/8} \end{pmatrix} \\ e^{j2\pi/8}\begin{pmatrix} 1 \\ e^{j\pi/2} \\ e^{j2\pi/2} \end{pmatrix} & e^{j2*5\pi/8}\begin{pmatrix} 1 \\ e^{j3\pi/4} \\ e^{j2*3\pi/4} \end{pmatrix} \end{pmatrix}.$$

It can be seen that since there exists an association between the sub-vectors and the coefficients in the base vector model u, the feedback method proposed herein can use less indication information for channel feedback, thereby reducing the time-frequency resource overhead. In addition, the column vector in the codeword is split into multiple sub-vectors, thereby providing finer channel information and bringing a larger beam gain. The preceding is an example of feasible indication information. Other suitable formats may also be used in actual application. This is not limited here.

Each column vector in the codeword model proposed in the present application includes sub-vectors and their coefficients. There exist associations between these sub-vectors and coefficients, a part of the sub-vectors and a part of the sub-vector coefficients can determine the remaining parts. Therefore, an indication parameter of at least one indication parameter in the indication information may indicate multiple elements in the codeword simultaneously. The indication parameter may be a single indication number or a set of indication numbers. For example, [0, 1] in $W_{0,1;3,4}$ can represent two separate indication parameters or a single indication parameter.

In an embodiment, the column vector of the codeword satisfies the form of the basis vector model u, and the indication information of the codeword includes at least one indication parameter, where an indication parameter indicates at least two elements in the set FS. FS is a set including sub-vectors and sub-vector coefficients of one column vector of the codeword. For example, one codeword has the following form:

$$W^{(s)}_{a,b;l,m,n;c,d;p,q} = \begin{pmatrix} V_1 & V_2 \end{pmatrix} = \begin{pmatrix} \alpha_a v_l & \alpha_c v_p \\ \alpha_b v_m & \alpha_d v_p \\ \alpha_b v_n & \alpha_q v_q \end{pmatrix}.$$

The column vectors $V_1$ and $V_2$ satisfy $V_1 = (\alpha_a v_l\ \alpha_b v_l\ \alpha_c v_m)^T$, $V_2 = (\alpha_d v_p\ \alpha_e v_p\ \alpha_f v_q)^T$. The two column vectors both satisfy the form of the basis vector u. The codeword form indicates that 2-layer transmission is supported. Each layer of precoding vector includes three sub-vectors, meaning that the MIMO array is divided into three subarrays.

The indication information of the codeword includes the superscript s indicating the codebook information and subscripts a, b, 1, m, n, c, d, p, and q indicating the column vector information of the codeword. The indication parameter b indicates the last two sub-coefficients of the column vector $V_1$ of the codeword. The indication parameter p indicates the first two sub-vectors of the column vector $V_2$ of the codeword. The indication parameter q indicates the last sub-vector and the coefficient of the vector simultaneously. For a more general case, one indication parameter in the indication information can indicate two or more elements in the set FS.

In another embodiment, the column vector of the codeword may be formed by the Kronecker product of two vectors satisfying the basis vector model u. For example, the i-th column vector of the codeword may be represented as follows:

$$V_i = u_1 \otimes u_2 = \begin{pmatrix} \alpha_{11} v_{11} \\ \alpha_{12} v_{21} \\ \alpha_{13} v_{31} \end{pmatrix} \otimes \begin{pmatrix} \alpha_{21} v_{21} \\ \alpha_{22} v_{22} \\ \alpha_{23} v_{23} \end{pmatrix}.$$

According to the associations between sub-vectors and sub-vector coefficients in the basis vector, an indication parameter in the indication information may indicate two elements in the set FS. The set FS includes sub-vectors and sub-vector coefficients in $u_1$ or $u_2$.

In another embodiment, the column vector of the codeword is generated by the weighted sum of several column vectors satisfying the basis vector model u. For example, the i-th column vector of the codeword is as follows:

$$V_i = 0.6 u_1 + 0.3 u_2 + 0.1 u_3 = 0.6 \begin{pmatrix} \alpha_{11} v_{11} \\ \alpha_{12} v_{21} \end{pmatrix} + 0.3 \begin{pmatrix} \alpha_{21} v_{21} \\ \alpha_{22} v_{22} \end{pmatrix} + 0.1 \begin{pmatrix} \alpha_{31} v_{31} \\ \alpha_{32} v_{32} \end{pmatrix}.$$

In the above formula, 0.6, 0.3, and 0.1 are preset weighting coefficients, $u_1$, $u_2$, and $u_3$ satisfy the basis vector model u, and each includes two sub-vectors. The fed-back indication information is required to include indication information of $u_1$, $u_2$, and $u_3$. An indication parameter of at least one parameter in the indication information may indicate two elements in the set FS. The set FS includes sub-vectors and sub-vector coefficients in $u_1$ or $u_2$ or $u_3$.

In another embodiment, the column vector of the codeword is generated by the weighted sum of multiple column vectors. Each column vector is formed by the Kronecker product of two vectors satisfying the basis vector model u. For example, the i-th column vector of the codeword is obtained in the following manner:

$$V_i = 0.6 V_{i1} + 0.4 V_{i2} = 0.6 u_{11} \otimes u_{12} + 0.4 u_{21} \otimes u_{22}.$$

In the above formula, 0.6 and 0.4 are weighting coefficients, and $u_{11}$, $u_{12}$, $u_{21}$, and $u_{22}$ satisfy the basis vector model u. The fed-back indication information is required to include indication information of $u_{11}$, $u_{12}$, $u_{21}$, and $u_{22}$. An indication parameter of at least one parameter in the indication information may indicate two elements in the set FS. The set FS includes sub-vectors and sub-vector coefficients in $u_{11}$, $u_{12}$, $u_{21}$, or $u_{22}$.

In another embodiment, the column vector of the codeword includes multiple sub-vectors. Each sub-vector may be constructed by the method described in one of the previous three embodiments. Correspondingly, the fed-back indication information is required to include all indication information for construction of the basis vector of the column vector. An indication parameter in the indication information may indicate two elements in the set FS. The set FS includes sub-vectors and sub-vector coefficients for construction of the basis vector of the column vector.

In practical engineering application, the indication parameter may be further compressed and encoded and then fed back to the first communication node to save the feedback overhead. The first communication node decompresses the received information to obtain the required indication information and then determines the selected codeword according to the indication information.

By using the feedback method proposed in the present application, a more reasonable precoding codebook can be designed for multilayer transmission, and a more suitable codeword can be selected based on measured channel information. On one hand, this can balance the feedback overhead of subarray precoding; on the other hand, this allows flexible control of the transmission performance of different layers, enabling adaptive codebook switching in MIMO multilayer transmission according to different scenarios, thereby satisfying users' communication requirements.

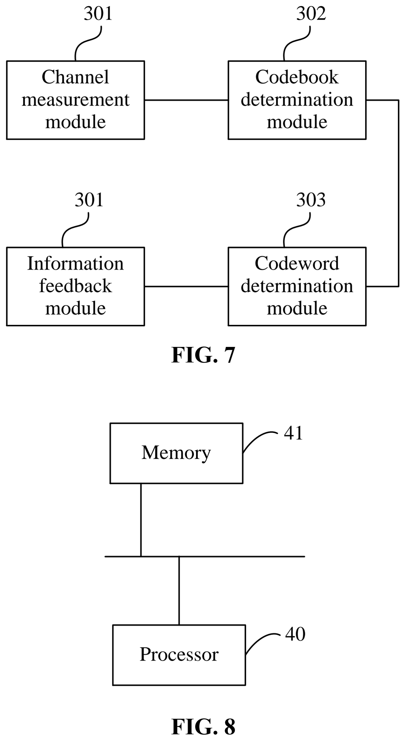

FIG. 7 is a diagram illustrating the structure of a channel information feedback apparatus according to embodiments of the present application. The apparatus can perform the channel information feedback method of any embodiment of the present application and has function modules and beneficial effects corresponding to the method performed. The apparatus may be implemented by software and/or hardware. As shown in FIG. 7, the apparatus of this embodiment of the present application includes a channel measurement module 301, a codebook determination module 302, a codeword determination module 303, and an information feedback module 304.

The channel measurement module 301 is configured to determine a measurement result of channel state information according to a measured reference signal.

The codebook determination module 302 is configured to determine a codebook. The codebook includes at least one codeword.

The codeword determination module 303 is configured to determine a codeword W in the codebook according to the measurement result.

The information feedback module 304 is configured to feed back indication information of the codeword W.

The codeword W is a matrix that has N rows and r columns and includes r column vectors $V_1$, $V_2$, ..., $V_r$, where the length of each column vector is N, N > 1, and r $\geq$ 1. The i-th column vector $V_i$ of the codeword W is constructed according to the following basis vector model u:

$$u = \begin{bmatrix} \alpha_1 v_1 \\ \alpha_2 v_2 \\ \vdots \\ \alpha_K v_K \end{bmatrix}.$$

In the above formula, the basis vector model u includes K sub-vectors, the length of the k-th sub-vector $v_k$ is $N_k$, $\alpha_k$ is a sub-vector coefficient, K $\geq$ 1, 1 $\leq$ k $\leq$ K, $N_k \geq$ 1, and i = 1, 2, ..., r.

At least two column vectors in the codeword W are constructed from basis vectors that satisfy the basis vector model u and include different numbers of sub-vectors.

In some embodiments of the present application, at least two adjacent column vectors $V_i$ and $V_{i+1}$ in the codeword W are constructed from basis vectors $u_i$ and $u_{i+1}$ that satisfy the basis vector model u and include different numbers of sub-vectors.

In some embodiments of the present application, the basis vector $u_i$ includes more sub-vectors than the basis vector $u_{i+1}$.

In some embodiments of the present application, the basis vector $u_i$ includes fewer sub-vectors than the basis vector $u_{i+1}$.

In some embodiments of the present application, the column vectors of the codeword W are divided into at least two column vector groups, and column vectors belonging to different column vector groups are constructed from basis vectors satisfying the basis vector model u and include different numbers of sub-vectors.

In some embodiments of the present application, each column vector group includes at most one column vector of the codeword W.

In some embodiments of the present application, each column vector group includes adjacent column vectors of the codeword W.

In some embodiments of the present application, each column vector group includes nonadjacent column vectors of the codeword W.

In some embodiments of the present application, the basis vector model u satisfies the following relationship: a subset $FS_1$ of a set $FS = [v_1, v_2, \cdots, v_K, \alpha_1, \alpha_2, \cdots, \alpha_K]$ including sub-vectors and sub-vector coefficients determines a subset $FS_2$ of the set FS.

In some embodiments of the present application, the i-th column vector $V_i$ of the codeword W is a column vector satisfying the basis vector model u, where i = 1, 2, ..., r.

In some embodiments of the present application, the i-th column vector $V_i$ of the codeword W is formed by the Kronecker product of two vectors $u_1$ and $u_2$. $u_1$ and $u_2$ are column vectors satisfying the basis vector model u.

In some embodiments of the present application, the i-th column vector $V_i$ of the codeword W is generated by the weighted sum of M column vectors:

$$V_i = \sum_{m=1}^{M} \beta_m u_m .$$

In the above formula, $\beta_m$ is a weighting coefficient, $u_m$ is a column vector satisfying the basis vector model u, i = 1, 2, ..., r, and m = 1, 2, ..., M.

In some embodiments of the present application, the i-th column vector $V_i$ of the codeword W is generated by the weighted sum of M column vectors:

$$V_i = \sum_{m=1}^{M} \beta_m w_m .$$

In the above formula, $\beta_m$ is a weighting coefficient, $w_m$ is formed by the Kronecker product of two column vectors $u_{m1}$ and $u_{m2}$, $u_{m1}$ and $u_{m2}$ are column vectors satisfying the basis vector model u, i = 1, 2, ..., r, and m = 1, 2, ..., M.

In some embodiments of the present application, the i-th column vector $V_i$ of the codeword W satisfies:

$$V_i = \begin{bmatrix} c_1 V_{i1} \\ c_2 V_{i2} \\ \vdots \\ c_S V_{iS} \end{bmatrix} .$$

In the above formula, $c_s$ is a coefficient, $V_{is}$ is a sub-vector, and s = 1, 2, ..., S. $V_{is}$ is generated in at least one of the following manners:

$V_{is}$ is generated by the basis vector model u;

$V_{is}$ is formed by the Kronecker product of two vectors $u_1$ and $u_2$, where $u_1$ and $u_2$ are column vectors satisfying the basis vector model u;

$V_{is}$ is generated by the weighted sum of M column vectors of the basis vector model through $V_{is} = \sum_{m=1}^{M} \beta_m u_m$, where $\beta_m$ is a weighting coefficient, $u_m$ is a column vector satisfying the basis vector model u, i = 1, 2, ..., r, and m = 1, 2, ..., M; or

$V_{is}$ is generated by the weighted sum of M column vectors of the basis vector model through $V_{is} = \sum_{m=1}^{M} \beta_m w_m$, where

$\beta_m$ is a weighting coefficient, $w_m$ is formed by the Kronecker product of two column vectors $u_{m1}$ and $u_{m2}$, and $u_{m1}$ and $u_{m2}$ are column vectors satisfying the basis vector model u, where i = 1, 2, ..., r, and m = 1, 2, ..., M.

In some embodiments of the present application, the indication information includes indication parameters indicating sub-vectors and sub-vector coefficients of basis vectors constituting the codeword W.

In some embodiments of the present application, the indication information includes at least one indication parameter, and an indication parameter indicates at least two elements in the set FS simultaneously.

In some embodiments of the present application, the k-th sub-vector $v_k$ of the basis vector model u satisfies:

$$v_k = \begin{cases} \begin{bmatrix} 1 & e^{j\theta_k} & \cdots & e^{j(N_k-1)\theta_k} \end{bmatrix}^T, & N_k > 1, \\ 1, & N_k = 1, \end{cases}$$

where $\theta_k$ is a real number, j is an imaginary unit, and the superscript T represents transposition.

In some embodiments of the present application, the k-th sub-vector $v_k$ of the basis vector model u is formed by the Kronecker product of two basis vectors $v_{k1}$ and $v_{k2}$. The basis vectors satisfy:

$$v_{kl} = \begin{cases} \begin{bmatrix} 1 & e^{j\theta_{kl}} & \cdots & e^{j(N_{kl}-1)\theta_{kl}} \end{bmatrix}^T, & N_{k1} > 1, \\ 1, & N_{k1} = 1, \end{cases}$$

where $\theta_{kl}$ is a real number, j is an imaginary unit, $l \in [1,2]$, $N_{k1}*N_{k2} = N_k$, and the superscript T represents transposition.

In some embodiments of the present application, the k-th sub-vector $v_k$ of the basis vector model u satisfies:

$$v_k = \begin{cases} \begin{bmatrix} 1 & e^{j\theta_k^{(1)}} & \cdots & e^{j\theta_k^{(N_k-1)}} \end{bmatrix}^T, & N_k > 1, \\ 1, & N_k = 1, \end{cases}$$

where $\theta_k^{(n)} = \xi_k + n\eta_k + n^2\zeta_k$, $\xi_k$, $\eta_k$, and $\zeta_k$ are each a preset real-valued constant, j is an imaginary unit, $1 \leq n \leq N_k$, and the superscript T represents transposition.

In some embodiments of the present application, the k-th sub-vector $v_k$ of the basis vector model u is formed by the Kronecker product of two basis vectors $v_{k1}$, and $v_{k2}$. The basis vectors satisfy:

$$v_{kl} = \begin{cases} \begin{bmatrix} 1 & e^{j\theta_{kl}^{(1)}} & \cdots & e^{j\theta_{kl}^{(N_{kl}-1)}} \end{bmatrix}^T, & N_{kl} > 1, \\ 1, & N_{kl} = 1, \end{cases}$$

where $\theta_{kl}^{(n)} = \xi_{kl} + n\eta_{kl} + n^2\zeta_{kl}$, $\xi_{kl}$, $\eta_{kl}$, and $\zeta_{kl}$ are each a preset real-valued constant, j is an imaginary unit, $l \in [1,2]$, $1 \leq n \leq N_{kl}$, $N_{k1} * N_{k2} = N_k$, and the superscript T represents transposition.

In some embodiments of the present application, the sub-vectors in the basis vector model u have the same length.

In some embodiments of the present application, at least two sub-vectors in the basis vector model u have different lengths.

FIG. 8 is a block diagram of an electronic device according to embodiments of the present application. The electronic device includes a processor 40 and a memory 41. One or more processors 40 may be included in the electronic device. One processor 40 is shown as an example in FIG. 8. The processor 40 and the memory 41 in the electronic device may be connected via a bus or in other manners. The connection via a bus is shown as an example in FIG. 8.

As a computer-readable storage medium, the memory 41 may be configured to store software programs, computer-executable programs and modules, such as programs corresponding to any transmission method in the embodiments of the present application and modules (the channel measurement module 301, the codebook determination module 302, the codebook determination module 303, and the information feedback module 304) corresponding to the transmission apparatus in the embodiments of the present application. The processor 40 executes software programs, instructions and modules stored in the memory 41 to perform functions and data processing of the electronic device, that is, to perform the preceding channel information feedback method.

The memory 41 may mainly include a program storage region and a data storage region. The program storage region may store an operating system and a program required by at least one function. The data storage region may store data created based on the use of the electronic device. Additionally, the memory 41 may include a high-speed random-access memory and may also include a nonvolatile memory such as at least one disk memory, a flash memory, or another nonvolatile solid-state memory. In some examples, the memory 41 may also be a memory remote from the processor 40 and connectable to the electronic device via a network. Examples of the network include, but are not limited to, the Internet, an intranet, a local area network, a mobile communication network, and a combination thereof.

Embodiments of the present application further provide a storage medium including computer-executable instructions. When executed by a computer processor, the computer-executable instructions are used for causing the computer processor to perform a channel information feedback method. The method includes the following: determining a measurement result of channel state information according to a measured reference signal; determining a codebook, where the codebook includes at least one codeword; determining a codeword W in the codebook according to the measurement result; and feeding back indication information of the codeword W.

The codeword W is a matrix that has N rows and r columns and includes r column vectors $V_1$, $V_2$, ..., $V_r$, where the length of each column vector is N, N > 1, and r ≥ 1.

The i-th column vector $V_i$ of the codeword W is constructed according to the following basis vector model u:

$$u = \begin{bmatrix} \alpha_1 v_1 \\ \alpha_2 v_2 \\ \vdots \\ \alpha_K v_K \end{bmatrix}.$$

In the above formula, the basis vector model u includes K sub-vectors. The length of the k-th sub-vector $v_k$ is $N_k$, $\alpha_k$ is a sub-vector coefficient, K ≥ 1, 1 ≤ k ≤ K, $N_k$ ≥ 1, and i = 1. 2, ..., r.

At least two column vectors in the codeword W are constructed from basis vectors that satisfy the basis vector model u and include different numbers of sub-vectors.

From the preceding description of embodiments, it is apparent to those skilled in the art that the present application may be implemented by software and necessary general-purpose hardware or may be implemented by hardware. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the method in the embodiments of the present application.

It is to be noted that units and modules included in the preceding embodiment of the apparatus are divided according to functional logic, and the division is not limited to this as long as the corresponding functions can be implemented. Additionally, the specific names of function units are used for distinguishing between each other and are not to limit the scope of the present application.

It is to be understood by those of ordinary skill in the art that some or all operations of the preceding method and function modules/units in the preceding apparatus or device may be implemented as software, firmware, hardware, and suitable combinations thereof.

In the hardware implementation, the division of the preceding function modules/units may not correspond to the division of physical components. For example, one physical component may include multiple functions, or one function or operation may be performed jointly by multiple physical components. Some or all physical components may be implemented as software executed by a processor such as a central processing unit, a digital signal processor, or a microprocessor, may be implemented as hardware, or may be implemented as integrated circuits such as application-specific integrated circuits. The corresponding software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, a RAM, a ROM, an EEPROM, a flash memory or other memory technologies, a CD-ROM, a digital video disc (DVD) or other optical storages, a magnetic cassette, a magnetic tape, a magnetic disk or other magnetic storage devices, or any other medium that can be used for storing desired information and that can be accessed by a computer. Additionally, as is known to those having ordinary skill in the art, the communication media generally include computer-readable instructions, data structures, program modules, or other data in carriers or in modulated data signals transported in other transport mechanisms and may include any information delivery medium.

## Claims

1. A channel information feedback method, comprising:

determining a measurement result of channel state information according to a measured reference signal;
determining a codebook, wherein the codebook includes at least one codeword;
determining a codeword W in the codebook according to the measurement result; and
feeding back indication information of the codeword W;
wherein the codeword W is a matrix that has N rows and r columns and comprises r column vectors $V_1$, $V_2$, ..., $V_r$, and a length of each column vector is N, N > 1, and r ≥ 1;
an i-th column vector $V_i$ of the codeword W is constructed according to the following basis vector model u:

$$u = \begin{bmatrix} \alpha_1 v_1 \\ \alpha_2 v_2 \\ \vdots \\ \alpha_K v_K \end{bmatrix},$$

wherein the basis vector model u comprises K sub-vectors, a length of a k-th sub-vector $v_k$ of the K sub-vectors is $N_k$, $\alpha_k$ is a sub-vector coefficient, K ≥ 1, 1 ≤ k ≤ K, $N_k$ ≥ 1, i = 1, 2, ..., r; and
at least two column vectors in the codeword W are constructed from basis vectors, and the basis vectors satisfy the basis vector model u and comprise different numbers of sub-vectors.

2. The method of claim 1, wherein the r column vectors of the codeword W are divided into at least two column vector groups, and column vectors belonging to different column vector groups are constructed from basis vectors satisfying the basis vector model u and comprise different numbers of sub-vectors.

3. The method of claim 2, wherein each column vector group comprises at most one column vector of the codeword W.

4. The method of claim 2, wherein each column vector group comprises adjacent column vectors of the codeword W.

5. The method of claim 2, wherein each column vector group comprises nonadjacent column vectors of the codeword W.

6. The method of claim 1, wherein the basis vector model u satisfies the following relationship: a subset $FS_1$ of a set $FS = [v_1, v_2, \cdots, v_K, \alpha_1, \alpha_2, \cdots, \alpha_K]$ including sub-vectors and sub-vector coefficients determines a subset $FS_2$ of the set FS.

7. The method of claim 1, wherein the i-th column vector $V_i$ of the codeword W is a column vector satisfying the basis vector model u, wherein i = 1, 2, ..., r.

8. The method of claim 1, wherein the i-th column vector $V_i$ of the codeword W is formed by a Kronecker product of two basis vectors $u_1$ and $u_2$ satisfying the basis vector model u, wherein i = 1, 2, ..., r.

9. The method of claim 1, wherein the i-th column vector $V_i$ of the codeword W is generated by a weighted sum of M basis vectors:

$$V_i = \sum_{m=1}^{M} \beta_m u_m,$$

wherein $\beta_m$ is a weighting coefficient, the basis vector $u_m$ satisfies the basis vector model u, i = 1, 2, ..., r, and m = 1, 2, ..., M.

10. The method of claim 1, wherein the i-th column vector $V_i$ of the codeword W is generated by a weighted sum of M column vectors:

$$V_i = \sum_{m=1}^{M} \beta_m w_m \;,$$

wherein $\beta_m$ is a weighting coefficient, the column vector $w_m$ is formed by a Kronecker product of basis vectors $u_{m1}$ and $u_{m2}$, $u_{m1}$ and $u_{m2}$ are constructed according to the basis vector model u, i = 1, 2, ..., r, and m = 1, 2, ..., M.

11. The method of claim 1, wherein the i-th column vector $V_i$ of the codeword W includes S sub-column vectors, and $V_i$ satisfies:

$$V_i = \begin{bmatrix} c_1 V_{i1} \\ c_2 V_{i2} \\ \vdots \\ c_S V_{iS} \end{bmatrix},$$

wherein S > 1, $c_s$ is a coefficient, $V_{is}$ is a sub-vector, s = 1, 2, ..., S, $V_{is}$ is generated in at least one of the following manners:

formed by a Kronecker product of two vectors $u_1$ and $u_2$, wherein $u_1$ and $u_2$ are column vectors satisfying the basis vector model u;

generated by a weighted sum of M column vectors of the basis vector model u through $V_{is} = \sum_{m=1}^{M} \beta_m u_m$ , wherein $\beta_m$ is a weighting coefficient, $u_m$ is a column vector satisfying the basis vector model u, i = 1, 2, ..., r, and m = 1, 2, ..., M; or

generated by a weighted sum of M column vectors of the basis vector model through $V_{is} = \sum_{m=1}^{M} \beta_m w_m$ , wherein $\beta_m$ is a weighting coefficient, $w_m$ is formed by a Kronecker product of two column vectors $u_{m1}$ and $u_{m2}$, and $u_{m1}$ and $u_{m2}$ are column vectors satisfying the basis vector model u, wherein i = 1, 2, ..., r, and m = 1, 2, ..., M.

12. The method of claim 1, wherein the indication information comprises an indication parameter indicating sub-vectors and sub-vector coefficients of basis vectors constituting the codeword W.

13. The method of claim 6, wherein the indication information includes at least one indication parameter, and an indication parameter of the at least one indication parameter indicates at least two elements in the set FS simultaneously.

14. The method of claim 1, wherein the k-th sub-vector $v_k$ of the basis vector model u satisfies:

$$v_k = \begin{cases} \begin{bmatrix} 1 & e^{j\theta_k} & \cdots & e^{j(N_k-1)\theta_k} \end{bmatrix}^T, & N_k > 1, \\ 1, & N_k = 1, \end{cases}$$

wherein $\theta_k$ is a real number, j is an imaginary unit, and the superscript T represents transposition.

15. The method of claim 1, wherein the k-th sub-vector $v_k$ of the basis vector model u is formed by a Kronecker product of two basis vectors $v_{k1}$ and $v_{k2}$, and the basis vectors satisfy:

$$v_{kl} = \begin{cases} \begin{bmatrix} 1 & e^{j\theta_{kl}} & \cdots & e^{j(N_{kl}-1)\theta_{kl}} \end{bmatrix}^{T}, & N_{k1} > 1, \\ 1, & N_{k1} = 1, \end{cases}$$

wherein $\theta_{kl}$ is a real number, j is an imaginary unit, $l \in [1,2]$, $N_{k1}*N_{k2} = N_k$, and the superscript T represents transposition.

16. The method of claim 1, wherein the k-th sub-vector $v_k$ of the basis vector model u satisfies:

$$v_{k} = \begin{cases} \begin{bmatrix} 1 & e^{j\theta_k^{(1)}} & \cdots & e^{j\theta_k^{(N_k-1)}} \end{bmatrix}^{T}, & N_k > 1, \\ 1, & N_k = 1, \end{cases}$$

wherein $\theta_k^{(n)} = \xi_k + n\eta_k + n^2\zeta_k$, $\xi_k, \eta_k$, and $\zeta_k$ are each a preset real-valued constant, j is an imaginary unit, $1 \le n \le N_k$, and the superscript T represents transposition.

17. The method of claim 1, wherein the k-th sub-vector $v_k$ of the basis vector model u is formed by a Kronecker product of two basis vectors $v_{k1}$ and $v_{k2}$, and the basis vectors satisfy:

$$v_{kl} = \begin{cases} \begin{bmatrix} 1 & e^{j\theta_{kl}^{(1)}} & \cdots & e^{j\theta_{kl}^{(N_{kl}-1)}} \end{bmatrix}^{T}, & N_{kl} > 1, \\ 1, & N_{kl} = 1, \end{cases}$$

wherein $\theta_{kl}^{(n)} = \xi_{kl} + n\eta_{kl} + n^2\zeta_{kl}$, $\xi_{kl}, \eta_{kl}$, and $\zeta_{kl}$ are each a preset real-valued constant, j is an imaginary unit, $l \in [1,2]$, $1 \le n \le N_{kl}$, $N_{k1}*N_{k2} = N_k$, and the superscript T represents transposition.

18. The method of claim 1, wherein the sub-vectors in the basis vector model u have a same length.

19. The method of claim 1, wherein at least two sub-vectors in the basis vector model u have different lengths.

20. An electronic device, comprising:

one or more processors; and
a memory configured to store at least one program;
wherein when executed by the one or more processors, the one or more programs cause the one or more processors to perform the method of any one of claims 1 to 19.

21. A computer-readable storage medium storing one or more programs configured to, when executed by one or more processors, cause the one or more processors to perform the method of any one of claims 1 to 19.

The electromagnetic field is dominated by reactive components

Reactive near-field region

Radiating near-field region (Fresnel zone)

Far-field region (Fraunhofer region)

$\dfrac{\lambda}{2\pi}$

$0.62\sqrt{\dfrac{D^3}{\lambda}}$

$2\dfrac{D^2}{\lambda}$

**FIG. 1**

**FIG. 2**

**FIG. 3**

**FIG. 4**

Receive a reference signal from a first communication node and perform channel estimation according to the received reference signal to obtain channel information ⟩ S1

Determine the codebook for feedback according to the obtained channel information ⟩ S2

Determine a codeword from the selected codebook to represent the current channel ⟩ S3

Feed back indication information corresponding to the selected codeword to the first communication node ⟩ S4

**FIG. 5**

(a) (b)

**FIG. 6**

301

302

Channel
measurement
module

Codebook
determination
module

301

303

Information
feedback
module

Codeword
determination
module

**FIG. 7**

41

Memory

40

Processor

**FIG. 8**

## INTERNATIONAL SEARCH REPORT

International application No.

**PCT/CN2023/142790**

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 信道, 信息, 测量, 反馈, 参考信号, 码本, 码字, 指示, 基向量, 向量, RS, CSI, feedback, channel, information, measurement, code, book, word, vector, indicate

### C. DOCUMENTS CONSIDERED TO BE RELEVANT

| Category* | Citation of document, with indication, where appropriate, of the relevant passages | Relevant to claim No. |
|---|---|---|
| A | CN 103973410 A (ZTE CORP.) 06 August 2014 (2014-08-06)<br>description, paragraphs [0017]-[0019] | 1-21 |
| A | CN 106160938 A (ZTE CORP.) 23 November 2016 (2016-11-23)<br>entire document | 1-21 |
| A | CN 106685582 A (ZTE CORP.) 17 May 2017 (2017-05-17)<br>entire document | 1-21 |
| A | CN 114024582 A (HUAWEI TECHNOLOGIES CO., LTD.) 08 February 2022 (2022-02-08)<br>entire document | 1-21 |
| A | US 2021273708 A1 (DATANG MOBILE COMMUNICATIONS EQUIPMENT CO., LTD.)<br>02 September 2021 (2021-09-02)<br>entire document | 1-21 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 March 2024** | **25 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/142790** |

| Patent document cited in search report | | | Publication date (day/month/year) | Patent family member(s) | | | Publication date (day/month/year) |
| --- | --- | --- | --- | --- | --- | --- | --- |
| CN | 103973410 | A | 06 August 2014 | None | | | |
| CN | 106160938 | A | 23 November 2016 | None | | | |
| CN | 106685582 | A | 17 May 2017 | None | | | |
| CN | 114024582 | A | 08 February 2022 | None | | | |
| US | 2021273708 | A1 | 02 September 2021 | US | 11190257 | B2 | 30 November 2021 |

Form PCT/ISA/210 (patent family annex) (July 2022)